# EUROPÄISCHE PATENTSCHRIFT

(11) **EP 3 286 029 B1**
(45) Veröffentlichungstag und Bekanntmachung des Hinweises auf die Patenterteilung: **08.05.2019**
(21) Anmeldenummer: 16712809.9
(22) Anmeldetag: 23.03.2016
(51) Int. Cl.: B60J 7/00, B62D 25/06

(54) **FAHRZEUGDACHMODUL MIT EINEM DACHELEMENT UND EINER ROLLOEINRICHTUNG**
VEHICLE ROOF MODULE HAVING A ROOF ELEMENT AND A ROLLER BLIND APPARATUS
MODULE TOIT DE VÉHICULE COMPRENANT UN ÉLÉMENT TOIT ET DISPOSITIF STORE À ENROULEUR

(30) Priorität: 23.04.2015 DE 102015005167
(43) Veröffentlichungstag der Anmeldung: 28.02.2018
(73) Patentinhaber: Webasto SE, 82131 Stockdorf (DE)
(72) Erfinder: BOTT, Guido, 82131 Stockdorf (DE)
(74) Vertreter: Fischer & Konnerth
(86) Internationale Anmeldenummer: PCT/EP2016/056442
(87) Internationale Veröffentlichungsnummer: WO 2016/169724

(56) Entgegenhaltungen:
- DE-A1- 10 039 522
- DE-A1-102006 046 105
- DE-B3-102005 056 331
- DE-B3-102007 024 359
- FR-A1- 2 988 767

## Beschreibung

Die Erfindung betrifft ein Fahrzeugdachmodul mit einem transparenten Dachelement und einer unterhalb des Dachelements angeordneten Rolloeinrichtung mit einer auf einer Wickelwelle aufgewickelten und zum unterseitigen Abdecken des Dachelements ausziehbaren Rollobahn, die beim Ausziehen von der Wickelwelle über eine Ablaufkante geführt ist.

Aus der DE 100 39 522 A1 ist ein gattungsgemäßes Fahrzeugdachmodul bekannt geworden, das eine durchsichtige Dachhaut und eine unter der Dachhaut angeordnete Rolloeinrichtung aufweist. Eine rahmenartige Innenschale des Dachmoduls ist aus einem Schaumkunststoff geformt und an die Dachhaut als Anschäumung unterseitig angeschäumt. Ein hinteres Rahmenteil der Innenschale weist ein unteres Rahmenelement auf, das sich von einem Verbindungssteg mit der Anschäumung flächig nach vorne erstreckt und zur Dachhaut hin einen Hohlraum abgrenzt, in dem eine Wickelwelle der Rolloeinrichtung angeordnet und mittels beidseitiger Lagerböcke am unteren Rahmenelement drehbar gelagert ist. Eine Rollobahn ist auf der Wickelwelle derart aufgewickelt, dass sie von der Unterseite der Wickelwelle abgewickelt wird, wenn die Rollobahn nach vorne unter die Dachhaut ausgezogen wird. Dabei gleitet die Rollobahn mit ihrer dem Fahrzeuginnenraum zugewandten unteren Sichtfläche auf einer eine Ablaufkante bildenden Aufkantung am Vorderrand des unteren Rahmenelements. Problematisch ist hierbei die Montage der Wickelwelle an den Lagerböcken des unteren Rahmenelements, da hierfür nur ein Spalt zwischen der Aufkantung und der Dachhaut zur Verfügung steht, der dementsprechend groß gebildet sein muss. Der Schaumkunststoff des unteren Rahmenelements ist in gewissem Umfang verformbar, so dass das untere Rahmenelement für die Montage der Wickelwelle herunter gebogen werden kann. Andererseits kann diese Verformbarkeit eine stabile ortsfeste Lagerung der Wickelwelle wie auch eine stabile Positionierung der die Ablaufkante bildenden Aufkantung erschweren. Des Weiteren kann das Gleiten der Rollobahn auf ihrer unteren Sichtseite an der Aufkantung zu einer Beeinträchtigung der Oberfläche der Rolllobahn führen, z. B. falls Verschmutzung an der Aufkantung auf die Oberfläche der Rollobahn übertragen wird.

Der Erfindung liegt die Aufgabe zugrunde, ein eingangs genanntes Fahrzeugdachmodul zu schaffen, das hinsichtlich seiner Rolloeinrichtung verbessert ist.

Diese Aufgabe wird bei dem eingangs genannten Fahrzeugdachmodul erfindungsgemäß dadurch gelöst, dass eine am Dachelement angebrachte An- oder Umschäumung einen die Ablaufkante aufweisenden Ablaufkantenkörper enthält.

Vorteilhafte Ausgestaltungen der Erfindung sind in den abhängigen Ansprüchen angegeben.

Bei dem erfindungsgemäßen Fahrzeugdachmodul ist die Ablaufkante somit ein Bestandteil des Dachelements und wird mit diesem als Einheit am Dachmodul angebracht. Folglich ist eine spezielle Befestigungseinrichtung oder dergleichen zur Montage der Ablaufkante oder eines die Ablaufkante tragenden Bauteils nicht erforderlich.

Das Dachelement ist beispielsweise ein Glasfestelement oder FTM (fixed transparent module) und insbesondere ein Glasdeckel oder ein Kunststoffdeckel aus einem transparenten oder durchsichtigen Kunststoff wie z. B. PC oder PMMA. Das Dachelement weist eine An- oder Umschäumung auf, die zumindest an der Unterseite des Dachelements in der Nähe des Randes des Dachelements oder Deckels angeschäumt ist und z. B. einen Verstärkungsrahmen oder eine Halterung für eine Dichtung aufweist oder auch den Rand des Dachelements als Randschutz umgreift.

Diese An- oder Umschäumung, die am Dachelement randseitig umlaufend gebildet sein kann, ist im Bereich der Wickelwelle der Rolloeinrichtung mit einer Erweiterung gebildet, die einen Ablaufkantenkörper darstellt, der die Ablaufkante enthält. Die Ablaufkante ist somit formstabil und lagestabil in Bezug zu dem Dachelement und zu der Wickelwelle angeordnet. Da die Ablaufkante bzw. der Ablaufkantenkörper bei der Herstellung der An- oder Umschäumung erzeugt wird, ist kein zusätzlicher oder nachträglicher Montagevorgang erforderlich. Die Länge des Ablaufkantenkörpers in Querrichtung des Dachmoduls bzw. des Dachelementes stimmt im Wesentlichen mit der Breite der Rollobahn oder der Länge der Wickelwelle überein.

Erfindungsgemäß ragt der Ablaufkantenkörper vom Dachelement in der Art einer Leiste oder eines Stegs nach unten vor, ist aber nicht auf eine solche Form beschränkt. Insbesondere ragt der stegartige Ablaufkantenkörper unmittelbar von der Unterseite des Dachelements nach unten vor.

Gemäß einer bevorzugten Gestaltung ist vorgesehen, dass die Ablaufkante von dem Ablaufkantenkörper der An- oder Umschäumung selbst gebildet ist. Damit wird schon ohne ein weiteres Zusatzbauteil die Ablaufkante von dem Kunststoffmaterial bereitgestellt.

Gemäß einer alternativen Gestaltung kann die Ablaufkante von einer auf dem Ablaufkantenkörper aufgebrachten Schicht oder Folie gebildet oder von dieser abgedeckt sein. Der Ablaufkantenkörper gibt grundsätzlich die Form der Ablaufkante vor und die Schicht oder Folie bildet einen Überzug, auf dem die Rollobahn gleiten kann. Die Schicht oder Folie kann spezielle Eigenschaften aufweisen, die das Kunststoffmaterial der Anschäumung gegebenenfalls nicht bietet, insbesondere im Hinblick auf verbesserte Gleiteigenschaften der Rollobahn auf der Ablaufkante du Verschleißfestigkeit der Ablaufkante.

Weiterhin kann in einer bevorzugten Gestaltung die Ablaufkante von einem am Ablaufkantenkörper angeordneten Zusatzteil gebildet sein. Ein solches Zusatzteil kann beispielsweise mit speziellen Materialeigenschaften oder in einer speziellen Gestalt gebildet sein.

Insbesondere ist das Zusatzteil am Ablaufkantenkörper fest oder lösbar angebracht und es kann zweckmäßigerweise angesteckt, angeclipst, angeklebt oder angeschäumt sein. So kann z. B. eine aus hartem abriebfestem Material hergestellte Ablaufkante an dem Ablaufkantenkörper aus weicherem Schaummaterial angebracht werden.

Die Ablaufkante kann von einer gekrümmten Fläche gebildet sein, so dass die Rollobahn in flächigem Gleitkontakt mit der Ablaufkante ist. Die Ablaufkante kann aber auch als schmale Kante gebildet sein. Die gekrümmte Fläche ist z. B. von einem im Querschnitt z. B. kreisabschnittsförmig oder elliptisch geformten Abschnitt des Ablaufkantenkörpers oder des Zusatzteils, der bzw. das die Ablaufkante bildet, geformt.

Wenn es auch bevorzugt ist, dass sich die Ablaufkante durchgehend erstreckt, so kann sie auch zumindest eine Unterbrechung aufweisen. Die Unterbrechung ist z. B. eine Aussparung oder ein Rücksprung in dem Ablaufkantenkörper oder dem Zusatzteil.

Die Ablaufkante kann sich geradlinig erstrecken. Jedoch kann sie auch zumindest einen nach oben bzw. gegen das Dachelement gewölbten Kantenabschnitt aufweisen oder über ihre gesamte Länge einer nach oben gewölbten Kurvenlinie folgen. Hierbei kann die Wickelwelle selbst eine nach oben gerichtete Krümmung oder Wölbung aufweisen, wodurch eine Wölbung des ausgezogenen Abschnitts der Rollobahn vorgegeben wird. Eine Rolloeinrichtung mit einer derartigen Wickelwelle ist aus der DE 10 2006 046 105 A1 bekannt.

Es ist bevorzugt, dass die Wickelwelle mit ihrer Rollobahn und die Ablaufkante in einer solchen gegenseitigen Zuordnung angeordnet sind, dass die Rollobahn beim Abwickeln von der Wickelwelle mit ihrer zum Dachelement weisenden Oberseite über die Ablaufkante gleitet. Es ist dann ausgeschlossen, dass die Unterseite der Rollobahn, die dem Fahrzeuginnenraum zugewandt ist und im Sichtbereich der Fahrzeuginsassen liegt, durch die Ablaufkante oder durch Ablagerungen oder Schmutz an der Ablaufkante verschmutzt oder beschädigt werden kann.

Wenn die Wickelwelle am Dachmodul und insbesondere an einem Dachmodulrahmen und damit an einem steifen Bauteil drehbar gelagert ist, kann eine solche Lagerung mit der erforderlichen Steifigkeit gebildet werden, so dass Schwingungen der Wickelwelle im Fahrbetrieb vermieden werden können.

Die Wickelwelle kann unterseitig von einer himmelartigen Abdeckung, die insbesondere am Dachmodulrahmen befestigt ist, abgedeckt sein. Die Abdeckung übernimmt keine Lagerfunktion für die Wickelwelle, sondern wird als eigenständiges Teil unabhängig von der Wickelwelle montiert.

Nachfolgend wird die Erfindung anhand von Ausführungsbeispielen eines erfindungsgemäßen Fahrzeugdachmoduls unter Bezugnahme auf die Zeichnung näher erläutert. Es zeigt:
- Fig. 1: in einer isometrischen Ansicht ein Fahrzeugdach mit einem fest angebrachten Dachelement eines Dachmoduls, das weitere Dachelemente aufweisen kann;
- Fig. 2: in einer Längsschnittansicht gemäß der Linie II - II in Fig. 1 einen rückwärtigen Endabschnitt des Dachmoduls mit dem fest angebrachten Dachelement oder Deckel sowie einer unter dem Deckel angeordneten Rolloeinrichtung, deren Rollobahn über eine am Deckel angebrachte Ablaufkante geführt ist;
- Fig. 3: in einer Längsschnittansicht gemäß Fig. 2 das in Fig. 2 dargestellte Fahrzeugdach mit einer zweiten Ausführungsform der Ablaufkante;
- Fig. 4: in einer Längsschnittansicht gemäß Fig. 2 das in Fig. 2 dargestellte Fahrzeugdach mit einer dritten Ausführungsform der Ablaufkante;
- Fig. 5: in einer Querschnittansicht gemäß Linie V - V in Fig. 1 in schematischer Darstellung einen seitlichen Randbereich des Dachmoduls mit der Ablaufkante und einer Wickelwelle der Rolloeinrichtung und einer die Wickelwelle lagernden Lagereinrichtung; und
- Fig. 6: in einer Querschnittansicht gemäß Fig. 5 in schematischer Darstellung den seitlichen Randbereich des Dachmoduls mit einer nach oben gewölbten Ablaufkante.

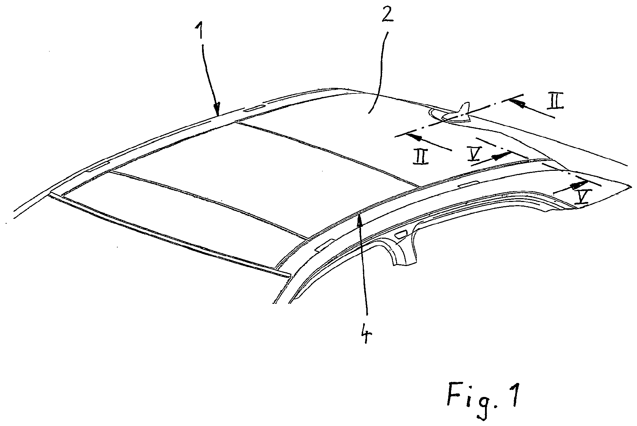

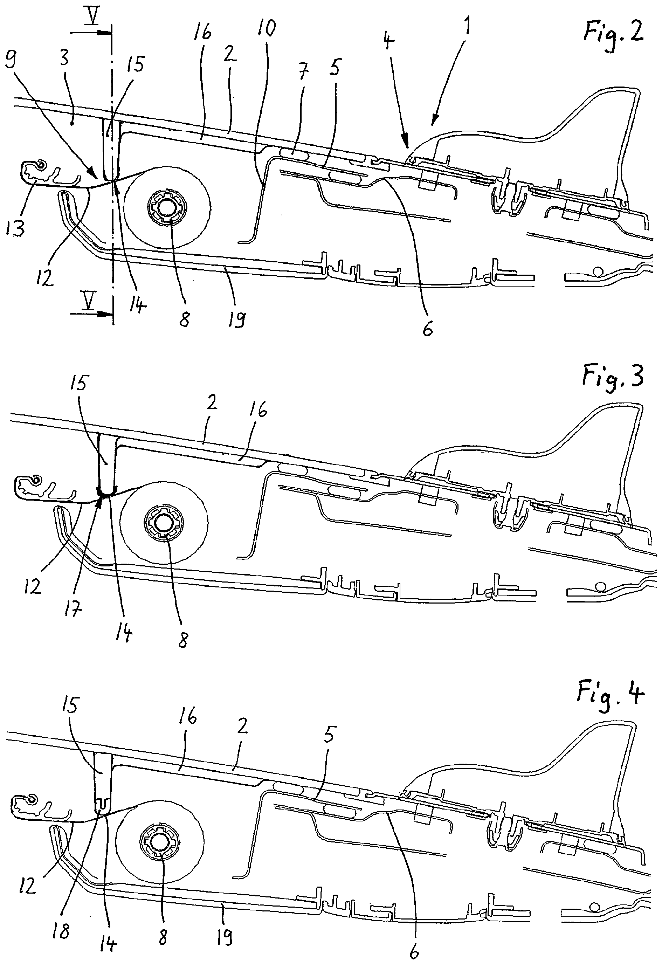

Ein Fahrzeugdach 1 eines Fahrzeugs wie z. B. eines Personenkraftwagens weist ein Dachelement in Form eines Deckels 2 auf (siehe Fig. 1), der aus einem lichtdurchlässigen Material hergestellt ist, insbesondere ein Glasdeckel ist und eine Dachöffnung 3 fest verschließt. Der Deckel 2 ist insbesondere ein Teil eines Dachmoduls 4, das einen Dachmodulrahmen 5 aufweist, über den es an einem die Dachöffnung 3 umgebenden Dachrahmen 6 des Fahrzeugdaches 1 befestigt ist. Das Dachmodul 4 kann vor oder hinter dem fest eingebauten Deckel 2 noch weitere Dachelemente oder Deckel aufweisen. Gemäß der in Fig. 2 dargestellten Ausführungsform ist der Deckel 2 mittels einer umlaufenden Kleberaupe 7 am Dachmodulrahmen 5 befestigt. Der Deckel 2 kann jedoch auch direkt an dem Dachrahmen 6 befestigt sein.

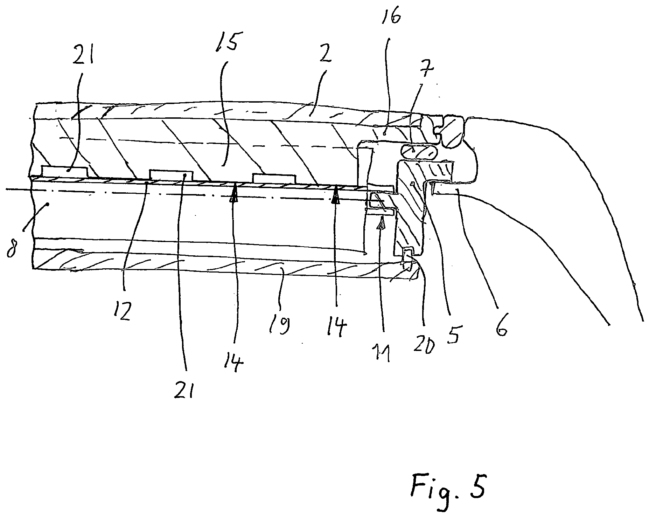

Unterhalb des Deckels 2 ist eine Wickelwelle 8 einer Rolloeinrichtung 9 drehbar gelagert. Die Wickelwelle 8 ist nahe vor einem Schenkel 10 eines hinteren Querabschnitts des Dachmodulrahmens 5 angeordnet und mittels einer Lagereinrichtung mit beidseits der Wickelwelle 8 vorgesehenen Lagern 11, die am Dachmodulrahmen 5 angebracht sind (siehe Fig. 5), drehbar gelagert. Eine Rollobahn 12 ist auf der durch Federkraft in Wickelrichtung vorgespannten Wickelwelle 8 aufgewickelt und von der Wickelwelle 8 gegen die Federvorspannkraft abwickelbar. Die Rollobahn 12 ist von der Wickelwelle 8 auf der dem Deckel 2 zugewandten oberen Seite abwickelbar und mittels eines Zugspriegels 13 unter dem Deckel 2 nach vorne ausziehbar, so dass der lichtdurchlässige Bereich des Deckels 2 teilweise oder gänzlich abdeckbar und abschattbar ist. Der Zugspriegel 13 ist beidseits an Längsführungsschienen des Dachmoduls 4, die insbesondere am Dachmodulrahmen 5 angeordnet sind, verschiebbar geführt und insbesondere von einer Antriebseinrichtung in bekannter Weise verstellbar.

Die Rollobahn 12 ist über eine Ablaufkante 14 geführt, die in Auszugsrichtung vor der Wickelwelle 8 und nahe bei dieser angeordnet ist. Die Ablaufkante 14 ist am unteren Ende eines Ablaufkantenkörpers 15 angeordnet oder gebildet. Der Ablaufkantenkörper 15 ragt vom Deckel 2 stegartig oder leistenartig nach unten vor und erstreckt sich in Dachquerrichtung parallel zur Wickelwelle 8 im Wesentlichen über die Länge der Wickelwelle 8. Der Ablaufkantenkörper 15 ist als ein Teil einer An- oder Umschäumung 16 des Deckels 2 z. B. aus PU-Schaum gebildet. Eine solche An- oder Umschäumung 16 des Deckels 2 wird z. B. zum Einschäumen eines den Deckel 2 verstärkenden Rahmenbauteils oder als Dichtungsträger vorgesehen. Der Ablaufkantenkörper 15 ist z. B. als vorderer Teil der sich am Hinterrand des Deckels 2 in Querrichtung erstreckenden An- oder Umschäumung 16 (die An- oder Umschäumung 16 ist in den Fig. 2 bis 4 nur schematisch und in Längsrichtung des Deckels 2 verkürzt dargestellt) gebildet.

Die Ablaufkante 14 des Ablaufkantenkörpers 15 ist derart von der Wickelwelle 8 und von der Deckelunterseite beabstandet, dass die Rollobahn 12 in vollständig aufgewickelter Anordnung und bei maximalem Abwickelradius wie auch in vollständig abgewickelter Anordnung bei minimalem Abwickelradius mit ihrer Außen- oder Oberfläche stets über die Ablaufkante 14 geführt ist. Die vom Fahrzeuginnenraum her sichtbare Unterseite oder Innenfläche der Rollobahn 12 hat somit keinen Kontakt mit der Ablaufkante 14.

Die Ablaufkante 14 kann annähernd linienförmig sein oder im Querschnitt kurvenförmig oder abgerundet sein, so dass die Rollobahn 12 an der Ablaufkante 14 auch über eine Fläche geführt sein kann.

Fig. 2 zeigt ein erstes Ausführungsbeispiel, bei dem die Ablaufkante 14 von dem unteren Rand des Ablaufkantenkörpers 15 selbst gebildet ist, die Rollobahn 12 demnach unmittelbar auf dem Kunststoff-Schaummaterial der An- oder Umschäumung 16 bzw. des Ablaufkantenkörpers 15 gleitet.

Fig. 3 zeigt ein zweites Ausführungsbeispiel, bei dem auf den unteren Rand des Ablaufkantenkörpers 15 eine Schicht oder Folie 17 oder dergleichen aufgebracht, insbesondere aufgeklebt ist, die die Ablaufkante 14 bildet und über die die Rollobahn 12 gleitet. Mit der Folie 17 kann eine günstige Materialpaarung für die Gleitführung und Abstützung der Rollobahn 12 bereit gestellt werden.

Fig. 4 zeigt ein drittes Ausführungsbeispiel, bei dem an dem unteren Rand des Ablaufkantenkörpers 15 ein Zusatzteil 18 angebracht ist, z. B. mittels einer Steckverbindung, Clipverbindung oder Klebeverbindung, das die Ablaufkante 14 bildet und über das die Rollobahn 12 gleitet. Mit dem Zusatzteil 18 kann gleichfalls eine günstige Materialpaarung für die Gleitabstützung der Rollobahn 12 bereit gestellt werden. Wenn Zusatzteile 18 in unterschiedlichen Formen und Größen verfügbar sind, kann die Position der Ablaufkante 14 durch Wechsel bzw. entsprechende Auswahl eines jeweiligen Zusatzteils 18 variiert werden. Das Zusatzteil 18 kann z. B. auf einen stegartig gebildeten Rand des Ablaufkantenkörpers 15 aufgesteckt und daran geklemmt oder mit einer Rastung festgelegt werden.

Unterhalb der Wickelwelle 8 ist eine himmelartige Abdeckung 19 oder Verkleidung angebracht, die die Wickelwelle 8 unterseitig abdeckt, aber ohne Kontakt mit der Rollobahn 12 ist. Die Abdeckung 19 ist am Dachmodul 4 bzw. dem Dachmodulrahmen 5 befestigt, z. B. durch Clipverbindungen 20.

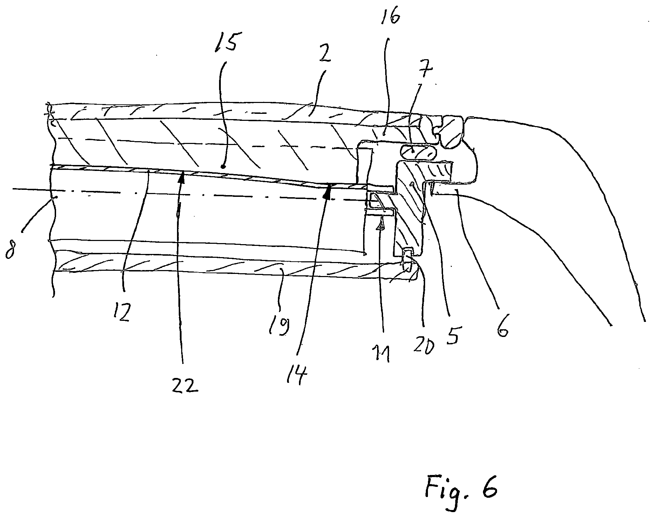

Die Ablaufkante 14 kann sich geradlinig erstrecken (siehe Fig. 5) oder sie kann zumindest einen nach oben gekrümmten oder gewölbten Kantenabschnitt 22 (siehe Fig. 6) aufweisen, insbesondere einen zentralen gewölbten Kantenabschnitt 22, oder sie ist über ihre gesamte Länge gewölbt. Die Ablaufkante 14 kann auch zumindest eine Unterbrechung 21 aufweisen (siehe Fig. 5), die z. B. von einer Ausnehmung am Ablaufkantenkörper 15 gebildet ist.

Die in der Beschreibung und anhand des Ausführungsbeispiels offenbarten einzelnen Merkmale können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Fahrzeugdach | 12 | Rollobahn |
| 2 | Deckel | 13 | Zugspriegel |
| 3 | Dachöffnung | 14 | Ablaufkante |
| 4 | Dachmodul | 15 | Ablaufkantenkörper |
| 5 | Dachmodulrahmen | 16 | An- oder Umschäumung |
| 6 | Dachrahmen | 17 | Folie |
| 7 | Kleberaupe | 18 | Zusatzteil |
| 8 | Wickelwelle | 19 | Abdeckung |
| 9 | Rolloeinrichtung | 20 | Clipverbindung |
| 10 | Schenkel | 21 | Unterbrechung |
| 11 | Lager | 22 | Kantenabschnitt |

## Patentansprüche

1. Fahrzeugdachmodul (4) mit einem transparenten Dachelement (2) und einer unterhalb des Dachelements (2) angeordneten Rolloeinrichtung (9) mit einer auf einer Wickelwelle (8) aufgewickelten und zum unterseitigen Abdecken des Dachelements (2) ausziehbaren Rollobahn (12), die beim Ausziehen von der Wickelwelle (8) über eine Ablaufkante (14) geführt ist, wobei eine am Dachelement (2) angebrachte An- oder Umschäumung (16) einen die Ablaufkante (14) aufweisenden Ablaufkantenkörper (15) enthält,
**dadurch gekennzeichnet,**
**dass** der Ablaufkantenkörper (15) vom Dachelement (2) stegartig nach unten vorragt.

2. Fahrzeugdachmodul nach Anspruch 1,
**dadurch gekennzeichnet, dass** die Ablaufkante (14) von dem Ablaufkantenkörper (15) der An- oder Umschäumung (16) gebildet ist.

3. Fahrzeugdachmodul nach Anspruch 1 oder 2,
**dadurch gekennzeichnet, dass** die Ablaufkante (14) von einer auf dem Ablaufkantenkörper (15) aufgebrachten Schicht oder Folie (17) gebildet oder von dieser abgedeckt ist.

4. Fahrzeugdachmodul nach Anspruch 1 oder 2,
**dadurch gekennzeichnet, dass** die Ablaufkante (14) von einem am Ablaufkantenkörper (15) angeordneten Zusatzteil (18) gebildet ist.

5. Fahrzeugdachmodul nach Anspruch 4,
**dadurch gekennzeichnet, dass** das Zusatzteil (18) am Ablaufkantenkörper (15) fest oder lösbar angebracht ist, insbesondere angesteckt, angeclipst, angeklebt oder angeschäumt ist.

6. Fahrzeugdachmodul nach einem der Ansprüche 1 bis 5,
**dadurch gekennzeichnet, dass** die Ablaufkante (14) von einer gekrümmten Fläche gebildet ist.

7. Fahrzeugdachmodul nach einem der Ansprüche 1 bis 6,
**dadurch gekennzeichnet, dass** die Ablaufkante (14) zumindest eine Unterbrechung (21) aufweist.

8. Fahrzeugdachmodul nach einem der Ansprüche 1 bis 7,
**dadurch gekennzeichnet, dass** die Ablaufkante (14) zumindest einen nach oben bzw. gegen das Dachelement (2) gewölbten Kantenabschnitt (22) aufweist.

9. Fahrzeugdachmodul nach einem der Ansprüche 1 bis 8,
**dadurch gekennzeichnet, dass** die Wickelwelle (8) mit ihrer Rollobahn (12) und die Ablaufkante (14) in einer solchen gegenseitigen Zuordnung angeordnet sind, dass die Rollobahn (12) beim Abwickeln von der Wickelwelle (8) mit ihrer zum Dachelement (2) weisenden Oberseite über die Ablaufkante (14) gleitet.

10. Fahrzeugdachmodul nach einem der Ansprüche 1 bis 9,
**dadurch gekennzeichnet, dass** die Wickelwelle (8) am Dachmodul (4) und insbesondere an einem Dachmodulrahmen (5) drehbar gelagert ist.

11. Fahrzeugdachmodul nach einem der Ansprüche 1 bis 10,
**dadurch gekennzeichnet, dass** die Wickelwelle (8) unterseitig von einer himmelartigen Abdeckung (19), die insbesondere am Dachmodulrahmen (5) befestigt ist, abgedeckt ist.

## Claims

1. Vehicle roof module (4) having a transparent roof element (2) and a roller blind apparatus (9) which is arranged below the roof element (2) and has a roller blind web (12) which is wound up on a winding shaft (8) and can be pulled out for covering the lower side of the roof element (2) and, as it is being pulled out from the winding shaft (8), is guided via a drain edge (14), wherein a foam attachment or foam encapsulation (16) attached to the roof element (2) contains a drain edge body (15) having the drain edge (14), **characterized in that** the drain edge body (15) projects downwards from the roof element (2) in the manner of a web.

2. Vehicle roof module according to Claim 1, **characterized in that** the drain edge (14) is formed by the drain edge body (15) of the foam attachment or foam encapsulation (16).

3. Vehicle roof module according to Claim 1 or 2, **characterized in that** the drain edge (14) is formed by a layer or film (17) attached to the drain edge body (15) or is covered by said layer or film.

4. Vehicle roof module according to Claim 1 or 2, **characterized in that** the drain edge (14) is formed by an additional part (18) arranged on the drain edge body (15).

5. Vehicle roof module according to Claim 4, **characterized in that** the additional part (18) is fixedly or releasably attached to the drain edge body (15), in particular is plugged, clipped, adhesively bonded or foamed thereon.

6. Vehicle roof module according to one of Claims 1 to 5, **characterized in that** the drain edge (14) is formed by a curved surface.

7. Vehicle roof module according to one of Claims 1 to 6, **characterized in that** the drain edge (14) has at least one interruption (21).

8. Vehicle roof module according to one of Claims 1 to 7, **characterized in that** the drain edge (14) has at least one edge portion (22) which is arched upwards or towards the roof element (2).

9. Vehicle roof module according to one of Claims 1 to 8, **characterized in that** the winding shaft (8) with its roller blind web (12) and the drain edge (14) are arranged in such a mutual association that the roller blind web (12), as it is unwound from the winding shaft (8), slides with its upper side facing the roof element (2) over the drain edge (14).

10. Vehicle roof module according to one of Claims 1 to 9, **characterized in that** the winding shaft (8) is mounted rotatably in the roof module (4) and in particular on a roof module frame (5).

11. Vehicle roof module according to one of Claims 1 to 10, **characterized in that** the winding shaft (8) is covered on the underside by a roof lining-like covering (19) which is fastened in particular to the roof module frame (5).

## Revendications

1. Module de toit de véhicule (4) avec un élément de toit transparent (2) et un store à enrouleur (9) disposé en dessous de l'élément de toit (2), avec une bande de store (12) enroulée sur un arbre d'enroulement (8) et extensible pour le recouvrement inférieur de l'élément de toit (2), qui est guidée sur une arête de déroulement (14) lors de l'extension à partir de l'arbre d'enroulement (8), dans lequel une garniture de mousse (16) agencée sur l'élément de toit (2) contient un corps d'arête de déroulement (15) présentant l'arête de déroulement (14), **caractérisé en ce que** le corps d'arête de déroulement (15) est saillant en forme de nervure vers le bas à partir de l'élément de toit (2).

2. Module de toit de véhicule selon la revendication 1, **caractérisé en ce que** l'arête de déroulement (14) est formée par le corps d'arête de déroulement (15) de la garniture de mousse (16).

3. Module de toit de véhicule selon une revendication 1 ou 2, **caractérisé en ce que** l'arête de déroulement (14) est formée par une couche ou une feuille (17) appliquée sur le corps d'arête de déroulement (15) ou est recouverte par celle-ci.

4. Module de toit de véhicule selon une revendication 1 ou 2, **caractérisé en ce que** l'arête de déroulement (14) est formée par une pièce supplémentaire (18) disposée sur le corps d'arête de déroulement (15).

5. Module de toit de véhicule selon la revendication 4, **caractérisé en ce que** la pièce supplémentaire (18) est montée sur le corps d'arête de déroulement (15) de façon fixe ou amovible, en particulier emboîtée, pincée, collée ou sous forme de mousse.

6. Module de toit de véhicule selon l'une quelconque des revendications 1 à 5, **caractérisé en ce que** l'arête de déroulement (14) est formée par une face courbe.

7. Module de toit de véhicule selon l'une quelconque des revendications 1 à 6, **caractérisé en ce que** l'arête de déroulement (14) présente au moins une interruption (21) .

8. Module de toit de véhicule selon l'une quelconque des revendications 1 à 7, **caractérisé en ce que** l'arête de déroulement (14) présente au moins une partie d'arête (22) incurvée vers le haut ou vers l'élément de toit (2).

9. Module de toit de véhicule selon l'une quelconque des revendications 1 à 8, **caractérisé en ce que** l'arbre d'enroulement (8) avec sa bande de store (12) et l'arête de déroulement (14) sont disposés en un agencement mutuel tel que la bande de store (12) glisse lors du déroulement de l'arbre d'enroulement (8) sur l'arête de déroulement (14) par son côté supérieur tourné vers l'élément de toit (2).

10. Module de toit de véhicule selon l'une quelconque des revendications 1 à 9, **caractérisé en ce que** l'arbre d'enroulement (8) est monté de façon rotative sur le module de toit (4) et en particulier sur un cadre de module de toit (5).

11. Module de toit de véhicule selon l'une quelconque des revendications 1 à 10, **caractérisé en ce que** l'arbre d'enroulement (8) est recouvert sur le côté inférieur par un recouvrement du type ciel de véhicule (19), en particulier est fixé au cadre de module de toit (5).
